Europäisches Patentamt

European Patent Office

Office européen des brevets

(11) Numéro de publication : **0 462 854 A1**

# (12) DEMANDE DE BREVET EUROPEEN

(21) Numéro de dépôt : **91401354.5**

(51) Int. Cl.⁵ : **B29C 49/74**

(22) Date de dépôt : **27.05.91**

(30) Priorité : **18.06.90 FR 9007588**

(43) Date de publication de la demande :
**27.12.91 Bulletin 91/52**

(84) Etats contractants désignés :
**AT BE CH DE DK ES GB GR IT LI LU NL SE**

(71) Demandeur : **STORK DARDAINE INDUSTRIES S.A.**
**Allée de la Garenne Z.I. Nord**
**F-28106 Dreux (FR)**

(72) Inventeur : **Le Naour, Laurent**
**5 rue de la Tuillerie**
**F-28500 Vernouillet (FR)**
Inventeur : **Dardaine, Edgar**
**Hauterive**
**F-28520 Sorel-Moussel (FR)**

(74) Mandataire : **Durand, Yves Armand Louis et al**
**CABINET WEINSTEIN 20, Avenue de**
**Friedland**
**F-75008 Paris (FR)**

(54) Dispositif de découpe de la partie supérieure d'un récipient constituant par exemple un goulot de bouteille.

(57) La présente invention concerne un dispositif de découpe de la partie supérieure d'un récipient constituant par exemple un goulot de bouteille.

Ce dispositif de découpe comprend essentiellement une pluralité de bras articulé (1) qui fonctionnent à la manière de pinces enserrant le goulot (G) des bouteilles (R), et qui portent chacun à au moins l'une de leurs extrémités (1a) une molette de découpe (2) disposée entre deux molettes (3) d'entraînement et de guidage du goulot (G) des bouteilles (R).

Ce dispositif permet le découpage ou le décolletage individuel de bouteilles en plastique fermées et destinées à contenir un liquide alimentaire quelconque tel que par exemple du lait.

Fig. 1

La présente invention a essentiellement pour objet un dispositif de découpe de la partie supérieure d'un récipient et permettant notamment la découpe du goulot fermé d'une bouteille en matière plastique avant son remplissage.

On a déjà proposé des systèmes pour découper ou décolleter les bouteilles fermées en matière plastique sortant d'une extrudeuse ou d'un magasin de stockage.

D'une manière générale, ces systèmes comprenaient une ou plusieurs molettes de découpe faisant saillie entre deux guides entre lesquels passent les bouteilles suivant une file, c'est-à-dire les unes derrière les autres, de façon que les goulots de ces bouteilles puissent être successivement découpés. Mais, avec ces systèmes, les bouteilles n'étaient pas correctement maintenues ce qui engendrait des défauts de découpe des goulots, sans parler du fait que, les bouteilles étant poussées les unes derrière les autres, il pouvait se produire des chutes de bouteilles dont les goulots ne pouvaient donc pas subir l'opération de découpe.

La présente invention a pour but de remédier notamment aux inconvénients ci-dessus en proposant un dispositif de découpe individuelle pour chaque bouteille et grâce auquel l'opération de découpe s'effectue alors que la préhension positive des goulots de chaque bouteille est assurée.

A cet effet, l'invention a pour objet un dispositif de découpe de la partie supérieure d'un récipient constituant par exemple un goulot de bouteille, et du type comprenant des moyens pour maintenir les bouteilles afin de permettre la découpe du goulot à l'aide d'une molette ou analogue de découpe, caractérisé en ce que lesdits moyens sont constitués par au moins deux bras articulés qui fonctionnent à la manière d'une pince enserrant le goulot de la bouteille et dont au moins l'un porte au moins une molette de découpe dudit goulot lors de sa rotation.

Suivant un mode de réalisation préféré, chaque bras porte à au moins l'une de ses extrémités une molette de découpe disposée entre deux molettes d'entraînement et de guidage du goulot de la bouteille.

Selon une autre caractéristique du dispositif de l'invention, les deux extrémités de chaque bras sont recourbées en sens inverse de manière que lesdites extrémités coopèrent chacune avec l'une des extrémités recourbées d'un autre bras et de manière que les molettes précitées et associées aux extrémités des bras enserrent le goulot des bouteilles.

Autrement dit, les molettes réparties aux extrémités recourbées de chaque bras se positionnent autour du goulot de chaque bouteille pour l'entraîner en rotation et le découper de façon guidée.

Suivant encore une autre caractéristique de ce dispositif, chaque bras est entraîné en rotation par un fourreau ou analogue traversé par un arbre portant un pignon engrenant avec d'autres pignons solidaires des molettes de découpe et des molettes d'entraînement et de guidage du goulot.

En outre, chaque bras porte des pignons intermédiaires assurant la liaison cinématique entre le pignon porté par l'arbre et les molettes précitées de découpe, et d'entrainement-guidage du goulot des bouteilles.

On précisera encore ici que le fourreau est fixé sensiblement au milieu de chaque bras de sorte que le pignon porté par l'arbre qui traverse ce fourreau entraîne, de part et d'autre de l'axe de l'arbre et successivement, un premier pignon intermédiaire, un pignon solidaire d'une molette d'entraînement et de guidage, un deuxième pignon intermédiaire, un pignon solidaire d'une molette de découpe, un troisième pignon intermédiaire, et un pignon solidaire d'une autre molette d'entraînement et de guidage du goulot de la bouteille.

Suivant encore une autre caractéristique de l'invention, chaque fourreau auquel est suspendu un bras est emmanché sur un élément tubulaire fixé à un bâti et est fixé de façon amovible sur cet élément tubulaire au moyen d'une vis.

Chaque fourreau, et donc chaque bras, peut être entraîné en rotation dans un sens ou dans l'autre par une biellette reliée de façon articulée à une tige actionnable par tout moyen approprié.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue partielle en plan de dessus et suivant la coupe I-I de la figure 3, d'un dispositif conforme aux principes de l'invention, les molettes de découpe, d'entraînement et de guidage ayant été supprimées sur la partie droite de la figure de façon à montrer notamment les pignons associés à ces molettes.

La figure 2 est une vue en coupe suivant la ligne II-II de la figure 1.

La figure 3 est une vue en coupe suivant la ligne III-III de la figure 1.

Les figures 4 à 6 illustrent respectivement, en plan de dessus, les trois phases essentielles du fonctionnement du dispositif de découpe selon cette invention.

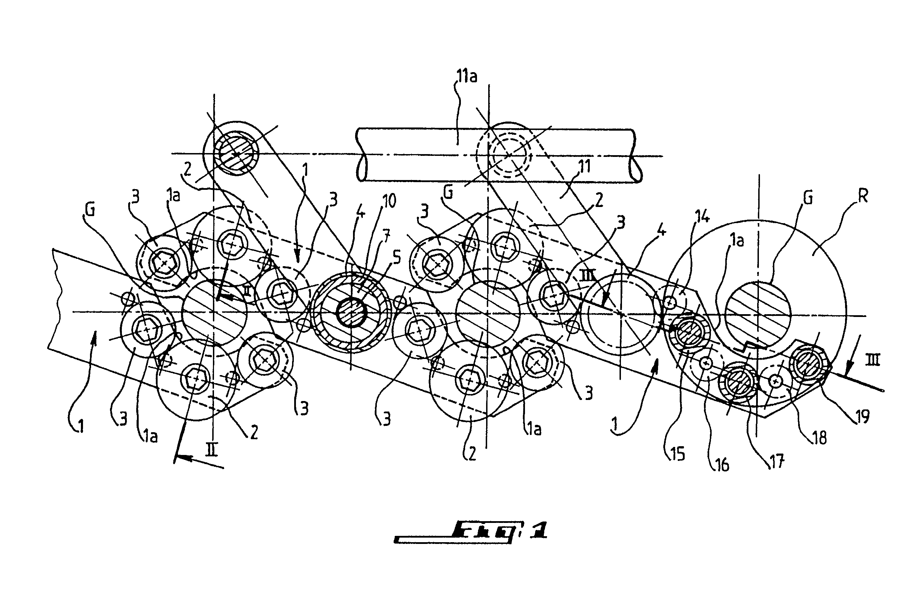

En se reportant plus particulièrement aux figures 1 à 3, et suivant un exemple de réalisation, on voit qu'un dispositif de découpe de goulots G de bouteilles fermées R en matière plastique comprend essentiellement, selon cette invention, une pluralité de bras articulés 1 qui fonctionnent à la manière de pinces pour enserrer le goulot G et qui comportent chacun deux extrémités 1a recourbées en sens inverse et conférant à chaque bras quelque peu la forme d'un S, chacune de ces extrémités portant une molette de découpe 2 disposée entre deux molettes 3 d'entraînement et de guidage en rotation du goulot G des bouteilles R.

Comme on le voit bien sur la figure 1, les deux extrémités recourbées 1a d'un bras coopèrent respectivement avec l'une des extrémités recourbées d'un autre bras, de sorte que les molettes 2 et 3 associées aux extrémités 1a puissent enserrer le goulot G des bouteilles R, individuellement.

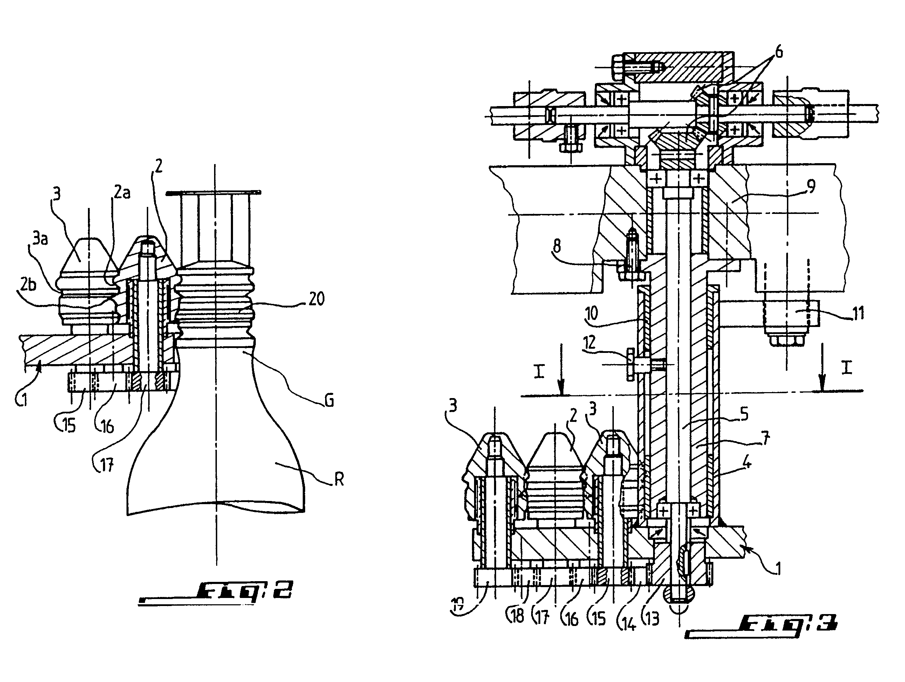

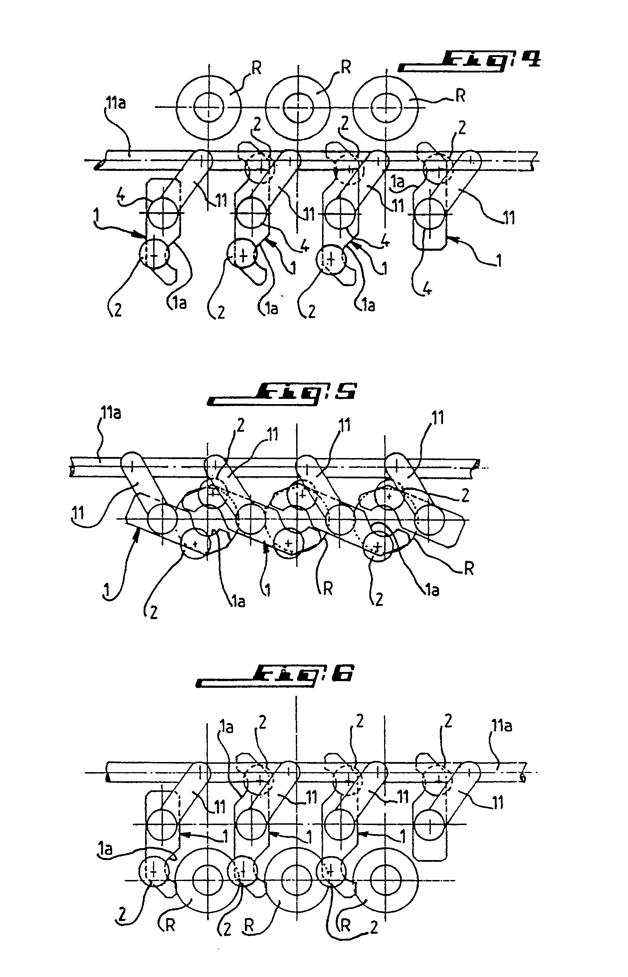

Chaque bras 1, comme on le voit mieux sur la figure 3 peut être entraîné en rotation par un fourreau 4 dont l'une des extrémités est fixée, par soudage par exemple, sur la partie milieu de chaque bras 1 (voir figure 1).

Chaque fourreau 4 auquel est suspendu un bras 1, est traversé par un arbre 5 entraîné en rotation dans le fourreau 4 par tout moyen approprié (non représenté) et cela par l'intermédiaire de renvois d'angle repérés en 6 sur la figure 3.

L'arbre 5 tourne dans un élément tubulaire 7 fixé, par l'intermédiaire de vis 8 par exemple, sur le bâti 9 de l'appareil, tandis que le fourreau 4 portant un bras 1 est emmanché sur l'élément tubulaire 7, avec interposition entre fourreau 4 et élément tubulaire 7 d'une bague 10 de guidage et de centrage. Chaque fourreau 4, et donc chaque bras 1 associé audit fourreau est retenu sur l'élément tubulaire 7 par une vis repérée en 12 et permettant ainsi de réaliser un montage amovible de chaque bras 1 sur le bâti 9 de l'appareil.

Chaque fourreau 4, et donc chaque bras 1 peut êtreentraîné en rotation dans un sens ou dans l'autre grâce à une biellette 11 bien visible sur les figures 1, 3 et 4 à 6, cette biellette étant montée articulée sur une tige ou analogue 11a actionnable suivant deux directions inverses par tout système approprié pneumatique ou électrique par exemple.

L'extrémité inférieure de l'arbre 5 porte un pignon 13 engrenant avec d'autres pignons solidaires des: molettes de découpe 2 et des molettes 3 d'entraînement et de guidage des goulots G des bouteilles R.

Suivant un exemple de réalisation préféré, et comme cela est bien visible sur la partie droite de la figure 1, et sur la figure 3, le pignon 13 de l'arbre 5 entraîne, de part et d'autre de l'axe de cet arbre, et successivement, un premier pignon intermédiaire 14 solidaire du bras 1, un pignon 15 solidaire d'une molette 3 d'entraînement et de guidage, un deuxième pignon intermédiaire 16, un pignon 17 solidaire d'une molette de découpe 2, un troisième pignon intermédiaire 18, et un pignon 19 solidaire d'une autre molette 3 d'entrainement et de guidage du goulot des bouteilles R.

Cette succession de pignons depuis le pignon 13 de l'arbre 5 jusqu'à l'extrémité du bras 1 se retrouve·

aux deux extrémités de ce bras, comme on peut le comprendre en se reportant à la figure 1.

Le fonctionnement du dispositif de découpe qui vient d'être décrit sera maintenant expliqué en se reportant aux figures 4 à 6.

Sur la figure 4, on voit une rangée de bouteilles R prête à être transférée au dispositif de découpe selon cette invention, alors que ce dispositif se trouve dans la position pince ouverte, c'est-à-dire que les bras 1 sont écartés l'un de l'autre.

Par commande de la tige 11a et donc des biellettes 11, les bras 1 se referment par leurs extrémités 1a sur les goulots G des bouteilles, de sorte que les molettes de découpe 2 et les molettes d'entraînement et guidage 3 viennent en contact avec ledit goulot. Ainsi, les molettes de guidage et les molettes de découpe guident le goulot ou le col des bouteilles en six points, comme on peut le voir sur les figures 1 et 5.

Et, toutes ces molettes 2 et 3 seront entraînées en rotation par l'arbre 5 et par tous les pignons décrits précédemment, de sorte que chaque bouteille sera entraînée en rotation par les molettes autour de son axe, les molettes de découpe 2 coupant le col des bouteilles pendant cette rotation.

La découpe étant terminée, et comme on le voit sur la figure 6, les bras 1 formant pinces sont ouverts par actionnement de la tige 11a et des biellettes 11, ce qui autorise un nouveau transfert d'une rangée de bouteilles.

On a donc réalisé suivant l'invention un système de découpe ou de décolletage des goulots de bouteille qui assure une préhension positive de chaque goulot de bouteille et permet une découpe fiable, précise et guidée de chaque goulot de bouteille sans risque de découpes défectueuses ou même d'absence de découpe.

Bien entendu, l'invention n'est nullement limitée: au mode de réalisation décrit et illustré qui n'a été donné qu'à titre d'exemple.

C'est ainsi que les crantages circulaires 2a prévus sur les molettes de découpe 2, et participant au guidage et à l'entraînement des goulots de bouteilles, ainsi que les crantages circulaires 3a sur les molettes 3 de guidage et d'entraînement peuvent avoir une forme quelconque et appropriée se conformant au crantage annulaire 20 prévu sur le goulot G de chaque bouteille, comme on le voit bien sur la figure 2. De même, la partie annulaire tranchante 2b de chaque molette de découpe 2 peut posséder une forme appropriée quelconque et apte à sectionner le goulot G des bouteilles R. Egalement, le nombre des bras 1 formant pinces peut être quelconque, de même que les moyens d'entraînement en rotation de l'arbre 5 et du fourreau 4 portant chaque bras 1 peuvent être quelconques. A cet égard on observera, comme on le voit sur les figures 4 à 6 que les deux bras 1 constituant les deux extrémités du système ne comportent des molettes 2, 3 qu'à une extrémité.

C'est dire que l'invention comprend tous les équivalents techniques des moyens décrits ainsi que leurs combinaisons, si celles-ci sont effectuées suivant son esprit.

**Revendications**

1. Dispositif de découpe de la partie supérieure d'un récipient constituant par exemple un goulot (G) de bouteille (R) et du type comprenant des moyens pour maintenir les bouteilles afin de permettre la découpe du goulot à l'aide d'une molette ou analogue de découpe, caractérisé en ce que lesdits moyens sort constitués par au moins deux bras articulés (1) qui fonctionnent à la manière d'une pince enserrant le goulot (G) de la bouteille et dont au moins l'un porte au moins une molette de découpe (2) dudit goulot lors de sa rotation.

2. Dispositif selon la revendication 1, caractérisé en ce que chaque bras précité (1) porte à au moins l'une de ses extrémités (1a) une molette de découpe (2) disposée entre deux molettes (3) d'entraînement et de guidage du goulot (G) de la bouteille.

3. Dispositif selon la revendication 1 ou 2, caractérisé en ce que les deux extrémités (1a) de chaque bras (1) sont recourbées en sens inverse de manière que lesdites extrémités coopèrent chacune avec l'une des extrémités recourbées d'un autre bras (1) et que les molettes précitées (2, 3) associées aux extrémités des bras enserrent le goulot( G) des bouteilles.

4. Dispositif selon l'une des revendications 1 à 3, caractérisé en ce que chaque bras précité (1) est entraîné en rotation par un fourreau ou analogue (4) traversé par un arbre (5) portant un pignon (13) engrenant avec d'autres pignons (15, 17, 19) solidaires des molettes de découpe (2) et des molettes (3) d'entraînement et de guidage du goulot G.

5. Dispositif selon l'une des revendications précédentes, caractérisé en ce que chaque bras précité (1) porte des pignons intermédiaires (14, 16, 18) assurant la liaison cinématique entre le pignon (13) porté par l'arbre (5) et les molettes précitées de découpe (2) et d'entraînement et de guidage (3).

6. Dispositif selon l'une des revendications précédentes, caractérisé en ce que le fourreau précité (4) est fixé sensiblement au milieu de chaque bras (1) de sorte que le pignon (13) porté par l'arbre (5) qui traverse ce fourreau, entraîne de part et d'autre de l'axe de l'arbre (5), et successivement, un premier pignon intermédiaire (14), un pignon (15) solidaire d'une molette (3) d'entraînement et guidage, un deuxième pignon intermédiaire (16), un pignon (17) solidaire d'une molette de découpe (2), un troisième pignon intermédiaire (18) et un pignon (19) solidaire d'une autre molette (3) d'entraînement et de guidage du goulot (G) de la bouteille.

7. Dispositif selon l'une des revendications précédentes, caractérisé en ce que chaque fourreau (4) précité auquel est suspendu un bras (1) est emmanché sur un élément tubulaire (7) fixé à un bâti (9) et est fixé de façon amovible sur cet élément tubulaire au moyen d'une vis (12).

8. Dispositif selon l'une des revendications précédentes, caractérisé en ce que chaque fourreau précité (4) peut être entraîné en rotation dans un sens et dans l'autre par une biellette (11) reliée de façon articulée à une tige ou analogue (11a) actionnable par un moyen approprié.

FIG. 1

Fig.3

Fig.2

EP 0 462 854 A1

_Fig. 4_

_Fig. 5_

_Fig. 6_

8

Office européen
des brevets

**RAPPORT DE RECHERCHE EUROPEENNE**

Numero de la demande

EP 91 40 1354

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 906 821 (D.F. SCHULTZ) <br> * Résumé; colonne 1, ligne 35 - colonne 2, ligne 2; figures 6-9 * <br> --- | 1 | B 29 C 49/74 |
| A | FR-A-2 213 148 (SOLVAY & CIE) <br> * Page 5, ligne 27 - page 6, ligne 24; figures 1,2 * <br> ----- | 1 | |

**DOMAINES TECHNIQUES RECHERCHES (Int. Cl.5)**

B 67 B
B 29 C
B 26 D

Le présent rapport a été établi pour toutes les revendications

| Lieu de la recherche | Date d'achèvement de la recherche | Examinateur |
|---|---|---|
| LA HAYE | 27-09-1991 | VAN DEN BOSSCHE E.J.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)